# EUROPÄISCHE PATENTSCHRIFT

(11) **EP 1 982 463 B1**
(45) Veröffentlichungstag und Bekanntmachung des Hinweises auf die Patenterteilung: **28.03.2018**
(21) Anmeldenummer: 07726191.5
(22) Anmeldetag: 09.01.2007
(51) Int. Cl.: H04L 12/10, H04M 11/06

(54) **ANSCHLUSSVORRICHTUNG UND VERFAHREN FÜR DIE SPANNUNGSVERSORGUNG EINER ANSCHLUSSVORRICHTUNG**
CONNECTION DEVICE AND VOLTAGE SUPPLY METHOD FOR A CONNECTION DEVICE
DISPOSITIF DE CONNEXION ET PROCÉDÉ POUR L'ALIMENTATION EN COURANT D'UN DISPOSITIF DE CONNEXION

(30) Priorität: 26.01.2006 DE 102006003844
(43) Veröffentlichungstag der Anmeldung: 22.10.2008
(73) Patentinhaber: ADTRAN GmbH, 10557 Berlin (DE)
(72) Erfinder: WIGGERS, Rainer, 17489 Greifswald (DE)
(74) Vertreter: Brachmann, Roland W.
(86) Internationale Anmeldenummer: PCT/EP2007/050196
(87) Internationale Veröffentlichungsnummer: WO 2007/085523

(56) Entgegenhaltungen:
- EP-A- 1 505 820

## Beschreibung

Die Erfindung betrifft eine Anschlussvorrichtung mit einer ersten Anschlusseinheit, die einen ersten Anschluss enthält, an den eine zu einem ersten Teilnehmer führende erste Leitung angeschlossen ist oder anschließbar ist.

Über die Anschlussleitung werden beispielsweise breitbandig Daten übertragen, beispielsweise in einer Datenübertragungsrichtung im Bereich von 0,5 Megabit pro Sekunde bis zu 100 Megabit pro Sekunde oder bis zu 200 Megabit pro Sekunde. Besonders verbreitet für solche breitbandigen Datenübertragungen sind xDSL-Verfahren (x Digital Subscriber Line). So wurden u.a. die folgenden Vorschläge gemacht:
- ADSL-Verfahren (Asymmetrical Digital Subscriber Line), z.B. gemäß den Standards ITU-T (International Telecommunication Union - Telecommunication Standardization Sector) G.992.x, ANSI (American National Standard Institute) T1.413, ETSI (European Telecommunication Standard Institute) RTS TM-06006, und
- VDSL-Verfahren (Very High Digital Subscriber Line), beispielsweise gemäß dem Standard ETSI - TS 101 270, ITU-T 993.x oder ANSI T1.424.

Die Anschlusseinheit ist beispielsweise ein sogenannter Anschlussport, der nur einem Teilnehmer zugeordnet ist. Die Anschlusseinheit enthält beispielsweise eine Sendeeinheit mit Treiberstufen und eine Empfangseinheit, die einen Analog/Digital-Wandler enthält. Sowohl die Treiberstufen als auch die Analog/Digital-Wandler haben eine Leistungsaufnahme beispielsweise größer als 1 Watt. Die Leistungsaufnahme steigt mit größer werdenden Übertragungsraten.

Der Anschluss ist beispielsweise eine Klemmverbindung, eine Steckverbindung oder eine Schraubverbindung für eine Zweidrahtleitung, insbesondere für verdrillte Kupferleitungen. Bisher ist es beispielsweise üblich, dass Endgeräte zur Bereitstellung von Schmalbanddiensten (POTS - Plane Old Telecommunication System, ISDN - Integrated Services Digital Network) durch die Vermittlungsstelle mit Energie versorgt werden, bzw. dass Endgeräte zur Bearbeitung von Breitbanddiensten (z.B. ADSL, VDSL) durch eine lokale Netzschnittstelle des Kunden versorgt werden. Mit einem steigenden Bedarf an Übertragungsbandbreite werden auch die netzseitigen Systemkomponenten, an die die kürzer werdenden Teilnehmerleitungen angeschlossen werden, immer kompakter, weil sie auch immer kleiner werdende Einzugsbereiche bedienen. Die Speisung dieser Systemkomponenten, z.B. sogenannte Mini-DSLAM (Digital Subscriber Line Access Multiplexer) könnte heute entweder über ein Fernspeiseverfahren von der Vermittlungsstelle aus erfolgen, bei dem die notwendige Energie über ein Bündel von Kupferadern herangeführt wird, oder über eine lokale Speisung, was jedoch die Einsatzmöglichkeit dieser Systemkomponenten stark einschränkt. In der Europäischen Patentanmeldung EP1505820A1 ist ferner ein Verfahren offenbart, bei dem netzseitige Systemkomponenten über die angeschlossenen Teilnehmerleitungen gespeist werden.

Obwohl Anschlussvorrichtungen bereits millionenfach eingesetzt werden, ist es dennoch Aufgabe der Erfindung, die bekannten Vorrichtungen und Verfahren zu verbessern, insbesondere hinsichtlich der Reichweite des Teilnehmeranschlusses, hinsichtlich der Spannungsversorgung und hinsichtlich der Energieeffizienz.

Die auf die Vorrichtung bezogene Aufgabe wird durch das im Anspruch 1 angegebene Verfahren und die im Anspruch 3 angegebene Anschlussvorrichtung gelöst. Eine Weiterbildung ist im abhängigen Anspruch 2 angegeben.

Die Erfindung geht von der Überlegung aus, dass eine funktionstüchtige breitbandige Übertragungsstrecke und eine gesicherte Energieversorgung beim Teilnehmer sehr eng zusammenhängen. Nur wenn die Energieversorgung beim Teilnehmer vorhanden ist, funktionieren auch dessen Endgeräte (z.B. Computer) und das zwischengeschaltete xDSL-Abschlussgerät (Modem). Die Erfindung macht sich genau diesen Zusammenhang zu eigen und kehrt das bisher allgemein übliche Speiseprinzip dadurch um, dass sie die Speiserichtung umkehrt, so dass nun von der Teilnehmerschnittstelle aus auch Netzkomponenten gespeist werden, die Anschlusseinheiten für mehrere Teilnehmer enthalten.

Deshalb enthält der erste Anschluss mindestens einen Betriebspotentialeingang, an dem ein erstes Betriebspotential zum Erzeugen einer Betriebsspannung der ersten Anschlusseinheit anliegt oder anlegbar ist. Somit enthält die erste Anschlusseinheit insbesondere keine eigene Energiequelle, wie eine Batterie oder einen Akkumulator. Ebenso wird die Anschlusseinheit nicht von der Netzseite her mit Energie versorgt. Bei einer Ausgestaltung ist die teilnehmerseitig angelegte Spannung kleiner als 150 Volt oder kleiner als 120 Volt und liegt bspw. im Bereich von 30 Volt bis 99 Volt. Über einen Wandler wird bei einer Ausgestaltung aus dieser Spannung in der Vorrichtung eine Betriebsspannung von bspw. kleiner 15 Volt oder kleiner 12 Volt erzeugt, z.B. von 12 Volt oder von 3,3 Volt.

Durch dieses Vorgehen lässt sich die Energieversorgung von netzseitigen Systemkomponenten einfacher und dadurch wirtschaftlicher realisieren. Beispielsweise sind bei Nutzung einer Fernspeisung von zentralen Einheiten der Anschlussvorrichtung durch den Netzbetreiber zukünftig weniger Kupferadern erforderlich, da von zentraler Seite nur Energie für Einheiten geliefert werden muss, die die Grundfunktion des Gerätes betreffen. Auch spart der Netzbetreiber Ressourcen zur Energieversorgung ein, da er weniger Energie bereitstellen muss.

Bei einer Weiterbildung der erfindungsgemäßen Anschlussvorrichtung enthält die Anschlussvorrichtung auch eine zweite Anschlusseinheit, die einen zweiten Anschluss enthält. An dem zweiten Anschluss ist eine zu einem zweiten Teilnehmer führende zweite Leitung angeschlossen oder anschließbar. Die zweite Leitung ist eine andere Leitung als die erste Leitung. Der zweite Anschluss enthält ebenfalls mindestens einen Betriebspotentialeingang an dem ein zweites Betriebspotential zum Erzeugen einer Betriebsspannung der zweiten Anschlusseinheit anliegt oder anlegbar ist.

Somit enthält die Anschlussvorrichtung bei der Weiterbildung mehrere Anschlusseinheiten, beispielsweise mehr als vier Anschlusseinheiten oder mehr als 24 Anschlusseinheiten. Da die Anschlusseinheiten von der Seite der Teilnehmer her mit Energie versorgt werden, summiert sich die Energieeinsparung für den Netzbetreiber. Die Energiekosten werden aber, wie unten bei einer anderen Weiterbildung erläutert, auch insgesamt verringert.

Bei einer nächsten Weiterbildung enthält die Anschlussvorrichtung eine zentrale Einheit, die einen zentralen Anschluss zu einem Datenübertragungsnetz hin enthält. Die zentrale Einheit gewährleistet Grundfunktionen der Anschlussvorrichtung, beispielsweise das Erkennen eines Verbindungsaufbauwunsches von der Teilnehmerseite her. Ebenso dient die zentrale Einheit beispielsweise der Weitergabe eines Verbindungsaufbauwunsches von der Netzseite her an eine der Anschlusseinheiten. Bei einer Ausführungsform enthält die zentrale Einheit einen Prozessor, der die Steuerungsaufgaben durchführt. Da die zentrale Einheit selbst keine Treiberstufen und/oder Analog/Digital-Wandler enthält, ist ihr Leistungsbedarf vergleichsweise gering, so dass bspw. eine netzseitige Speisung mit vertretbarem Aufwand möglich ist.

Bei einer anderen Weiterbildung enthält die zentrale Einheit eine zentrale Koppeleinheit zu der ersten Anschlusseinheit hin und zu der zweiten Anschlusseinheit hin. Die Koppeleinheit besitzt beispielsweise eine Hardwareschnittstelle, wie z.B. ein Datenbussystem, oder eine Softwareschnittstelle. Die erste Anschlusseinheit enthält bei der Weiterbildung eine erste Kopplungseinheit zu der zentralen Kopplungseinheit hin. Ebenso enthält die zweite Anschlusseinheit eine zweite Kopplungseinheit zu der zentralen Kopplungseinheit hin. Die zentrale Kopplungseinheit, die erste Kopplungseinheit und die zweite Kopplungseinheit sind anschlussvorrichtungsinterne Kopplungseinheiten. Damit bietet sich eine Speisung der zentralen Einheit und der Anschlusseinheiten auf die gleiche Art und Weise an. Aufgrund der oben genannten Überlegungen wird jedoch bei einer Ausgestaltung keine einheitliche Energieversorgung für die zentrale Einheit auf der einen Seite und für die Anschlusseinheiten auf der anderen Seite gewählt.

Bei einer anderen Weiterbildung ist die Anschlussvorrichtung Bestandteil eines Netzknotens, der mehrere Anschlussvorrichtungen enthält. Die zentralen Einheiten der Anschlussvorrichtungen haben eine gemeinsame Spannungsversorgungseinheit bzw. Energieversorgungseinheit. Der Netzknoten ist beispielsweise eine Vermittlungsstelle, falls über die Anschlussvorrichtung auch schmalbandige Telefondienste übertragen werden. Jedoch kann der Netzknoten auch ausschließlich breitbandige Anschlussvorrichtungen enthalten, insbesondere sogenannte DSLAMs.

Bei einer alternativen Weiterbildung enthält dagegen der zentrale Anschluss einen Betriebspotentialeingang, an den ein drittes Betriebspotential zum Erzeugen einer Betriebsspannung der zentralen Einheit anliegt oder anlegbar ist. Demzufolge wird die Anschlussvorrichtung ferngespeist. Die Fernspeisung erfolgt entweder über einen Anschluss, über den auch Daten übertragen werden oder über einen separaten Anschluss. Aus Gründen einer großen Energieeffizienz ist die netzseitig angelegte Spannung bei einer Ausgestaltung größer als 100 Volt oder größer als 200 Volt aber kleiner als bspw. 1000 Volt. Somit sind diese Spannungen für den Menschen gefährlich. Dies ist jedoch hinnehmbar, da auf der Netzseite nur extra geschultes Personal arbeitet.

Bei einer nächsten Weiterbildung ist der Betriebspotentialeingang der Anschlusseinheit bzw. der Anschlusseinheiten auch ein Datenübertragungseingang und/oder ein Datenübertragungsausgang. Damit sind keine zusätzlichen Leitungen für die Energieversorgung erforderlich. Insbesondere lassen sich nur zwei Drähte für den Anschluss eines Teilnehmers nutzen. Alternativ wird jedoch eine extra Leitung zur Spannungsversorgung verwendet, bspw. zusätzlich zu einer optischen Übertragungsleitung.

Bei einer nächsten Weiterbildung enthält die Anschlussvorrichtung eine Anforderungseinheit, deren Ausgang auf den ersten Anschluss einwirkt, um das Anlegen oder das Abschalten des ersten Betriebspotentials zu veranlassen. Durch die Anforderungseinheit wird ein dynamisches Ein- bzw. Ausschalten der Energieversorgung auf der Teilnehmerseite möglich. Beispielsweise können durch Nutzung der Verfahren der Gleichstromsignalisierung Signale zwischen teilnehmerseitigen und netzseitigen Komponenten ausgetauscht werden, die zur Energieeinsparung beitragen. Durch die Nutzung einer dynamischen Zuschaltung der Speiseleitung für die Teilnehmerschnittstelle ist es möglich, dass die Anschlusseinheit und gegebenenfalls auch das teilnehmerseitige Netzabschlussgerät nur in den Fällen aktiviert wird, wenn auch tatsächlich eine Datenübertragung realisiert werden soll. Diese Aktivierung kann sowohl vom Teilnehmer selbst oder aber auch durch die Netzkomponente veranlasst werden, wobei die Anforderungseinheit verwendet wird. Damit lässt sich die für den sogenannten Standby-Betrieb eines Modems erforderliche Energie erheblich reduzieren.

Bei einer nächsten Weiterbildung enthält die Anschlussvorrichtung zusätzlich zu der Anforderungseinheit oder auch alternativ zu der Anforderungseinheit eine Erfassungseinheit, die mit dem ersten Anschluss gekoppelt ist und die einen Signalisierungsausgang hat, an dem ein Signal ausgegeben wird, das angibt, dass das erste Betriebspotential anliegt. Dieses Signal lässt sich beispielsweise für Kontrollzwecke verwenden, um festzustellen, ob das teilnehmerseitige Gerät betriebsbereit ist, und insbesondere ob die Speisespannung anliegt. Jedoch lässt sich dieses Signal auch für andere Zwecke verwenden, beispielsweise dazu, um auch anschlussvorrichtungsintern eine Verbindung zwischen Betriebspotentialleitungen und Anschluss zu schalten.

Bei einer nächsten Weiterbildung enthält die erste Anschlusseinheit und/oder die zweite Anschlusseinheit eine Sendeeinheit und/oder eine Empfangseinheit, die gemäß einem xDSL-Verfahren arbeitet, insbesondere gemäß einem ADSL-Verfahren oder gemäß einem VDSL-Verfahren. Insbesondere bei den genannten Verfahren lassen sich durch die erfindungsgemäße Vorrichtung erhebliche technische Wirkungen erzielen, weil mit zunehmender Datenübertragungsrate die Anschlussvorrichtungen immer näher an den Teilnehmer herangebracht werden müssen. Näher an den Teilnehmer bedeutet jedoch andererseits, weiter entfernt von zentralen Einheiten des Netzbetreibers, so dass die Energieversorgung problematischer wird.

Bei einer anderen Weiterbildung ist an dem zentralen Anschluss eine optische Übertragungsleitung angeschlossen, beispielsweise eine Glasfaser- oder Plastikfaserleitung. Die Datenübertragungsrate auf diesen Leitungen liegt beispielsweise oberhalb von 1 Gigabit pro Sekunde oder oberhalb von 2 Gigabit pro Sekunde, so dass Daten gleichzeitig zu mehreren Anschlusseinheiten übertragen werden können, an denen eine Datenübertragung mit einer Datenübertragungsrate von beispielsweise größer als 25 Megabit pro Sekunde stattfindet.

Die Erfindung betrifft außerdem ein Verfahren für die Spannungsversorgung einer Anschlussvorrichtung, insbesondere der erfindungsgemäßen Anschlussvorrichtung oder einer ihrer Weiterbildungen. Damit wird ein Verfahren zur Speisung von Netzwerkkomponenten eines Teilnehmerzugangsnetzes (Access Network) durch den Teilnehmer angegeben. Bei dem erfindungsgemäßen Verfahren werden die folgenden Schritte ausgeführt:
- Anschließen eines teilnehmerfernen Endes einer ersten Teilnehmeranschlussleitung an die Anschlussvorrichtung, und
- Speisen der Anschlussvorrichtung oder nur eines Teils der Anschlussvorrichtung von einem teilnehmernahen Ende der Teilnehmeranschlussleitung her.

Für das erfindungsgemäße Verfahren gelten die für die erfindungsgemäße Vorrichtung bzw. deren Weiterbildungen angegebenen technischen Wirkungen ebenfalls.

Bei einer Weiterbildung des erfindungsgemäßen Verfahrens wird das Speisen der Anschlussvorrichtung automatisch veranlasst, insbesondere bedarfsabhängig bzw. dynamisch. Damit lässt sich der Energieverbrauch erheblich reduzieren, weil eine Speisung nur dann durchgeführt wird, wenn auch Daten übertragen werden sollen.

Bei einer nächsten Weiterbildung wird das Speisen automatisch von der Anschlussvorrichtung aus veranlasst. Damit können dem Teilnehmer trotz dynamischen Ein- und Ausschaltens der Speisung auch Dienste angeboten werden, bei denen er von der Netzseite her gerufen wird, beispielsweise Telefondienste, automatischer Empfang von E-Mail usw.

Bei einer anderen Weiterbildung veranlasst eine teilnehmerseitige Vorrichtung, beispielsweise ein xDSL-Modem, das Speisen automatisch. Das Modem erkennt einen Verbindungsaufbauwunsch des Teilnehmers automatisch und veranlasst dann die Speisung der teilnehmerfernen Anschlussvorrichtung.

Insbesondere wenn sowohl die Anschlussvorrichtung als auch eine teilnehmerseitige Vorrichtung das Speisen automatisch veranlassen, ist die Energieeinsparung besonders groß, wobei dem Teilnehmer dennoch alle bekannten Dienste ohne Einschränkung angeboten werden können.

Im Folgenden werden Ausführungsbeispiele der Erfindung anhand der beiliegenden Figuren erläutert. Darin zeigen:
- Figur 1: eine teilnehmerseitige Speisung einer Anschlusseinheit, die Teil einer Vermittlungsstelle ist,
- Figur 2: eine teilnehmerseitige Speisung einer Anschlusseinheit, die Teil einer von einer Vermittlungsstelle abgesetzten Einheit ist,
- Figur 3: Bestanteile der abgesetzten Einheit, und
- Figur 4: Einheiten, die eine dynamische teilnehmerseitige Energieversorgung einer Netzkomponente ermöglichen.

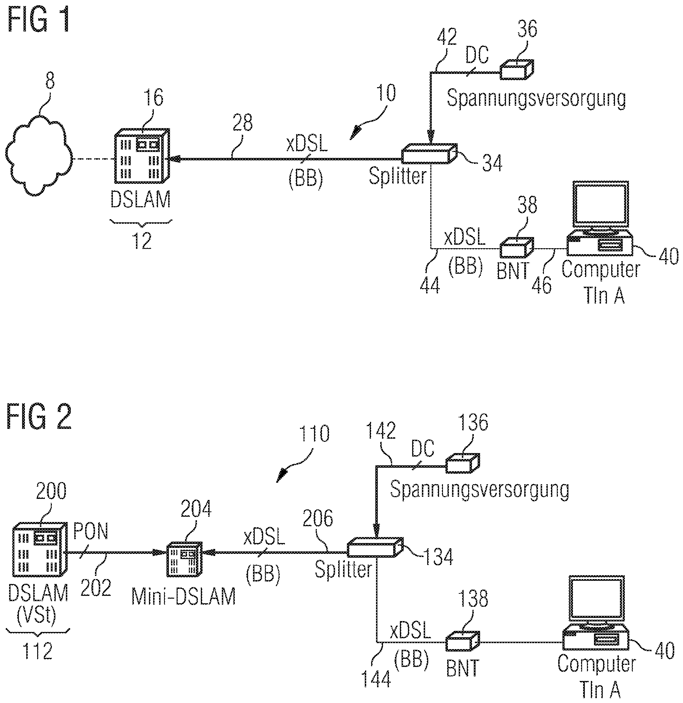

Figur 1 zeigt eine teilnehmerseitige Speisung einer Anschlusseinheit, die Teil einer Vermittlungsstelle 12 ist. Eine Anschlusskonfiguration 10 enthält in der Vermittlungsstelle 12 einen DSL-Zugangsmultiplexer 16, der auch als DSLAM bezeichnet wird. Von der Vermittlungsstelle 12 führen Leitungen zu einem Datenübertragungsnetz 8, beispielsweise zum Internet. Von dem Zugangsmultiplexer 16 führt eine Leitung 28 zu einer Trenneinheit 34 auf der Seite eines Teilnehmers TlnA. Die Trenneinheit 34 wird auch als Splitter bezeichnet und ist beispielsweise ein Passivfilter, das zum Entkoppeln einer Gleichspannung und einer breitbandigen Datenübertragung dient. Dem Teilnehmer TlnA gehören außerdem ein Breitband-Netzabschluss 38, der auch als BNT (Broadband Network Termination) bezeichnet wird, eine Datenverarbeitungsanlage 40, auf der beispielsweise ein E-Mailprogramm und/oder Browserprogramm installiert ist sowie eine Spannungsversorgungseinheit 36.

Die Spannungsversorgungseinheit 36 ist über eine Leitung 42 mit der Trenneinheit 34 verbunden. Der Netzabschluss 38 ist über eine Leitung 44 mit der Trenneinheit 34 verbunden. Zwischen dem Netzabschluss 38 und der Datenverarbeitungsanlage 40 liegt eine Leitung 46, beispielsweise eine Ethernet-Leitung.

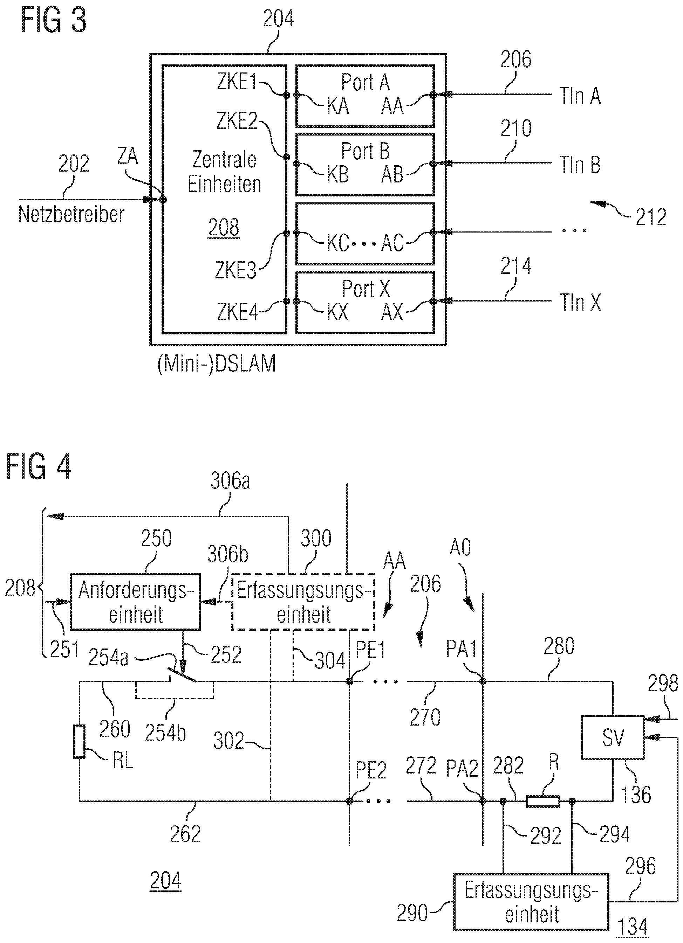

Abweichend zu bekannten xDSL-Konfigurationen wird bei der Anschlusskonfiguration 10 durch die Spannungsversorgungseinheit 36 eine Gleichspannung in die Trenneinheit 34, über die Leitung 28 bis zu einer Anschlusseinheit in dem Zugangsmultiplexer 16 eingespeist. Die Spannungsversorgungseinheit 36 lässt sich separat von dem Netzabschluss ausführen, wie in Figur 1 gezeigt. Dies bietet den Vorteil, dass bereits installierte Netzabschlusseinheiten ohne Veränderung weiter benutzt werden können, um die erfindungsgemäße Energieversorgung durchzuführen. Alternativ wird die Spannungsversorgungseinheit 36 jedoch in den Netzabschluss 38 eingebaut, der beispielsweise auch die Trenneinheit 34 enthalten kann. Befinden sich Spannungsversorgung 36 und Netzabschlusseinheit 38 in dem gleichen Gerät, so lässt sich ein unten anhand der Figur 4 erläutertes dynamisches Verfahren einfach realisieren.

Anstelle oder zusätzlich zu der Datenverarbeitungsanlage 40 könnte an der Netzabschlusseinheit 38 auch ein IP-Telefon (Internet Protocol) angeschlossen sein oder ein anderes Endgerät.

Auf der Leitung 28 werden Daten gemäß einem xDSL-Verfahren übertragen. Bei einem ADSL-Verfahren mit einer hohen Datenübertragungsrate in der Richtung von der Vermittlungsstelle 12 zum Teilnehmer TlnA und mit einer kleineren Datenübertragungsrate vom Teilnehmer TlnA bis zur Vermittlungsstelle 12. Der Zugangsmultiplexer 16 dient zum Anschluss einer Vielzahl von Teilnehmern, z.B. mehr als 100 oder mehr als 1000. Die von dem Teilnehmer empfangenen Daten werden von dem Zugangsmultiplexer 16 zu einem nicht dargestellten DSL-AC (Digital Subscriber Line - Access Concentrator) weitergeleitet, der sich beispielsweise im Datenübertragungsnetz 8 befindet. Der DSL-AC terminiert ein IP-Protokoll auf einer höheren Protokollebene. Außerdem wird im DSL-AC beispielsweise eine PPPoE-Verbindung (Point to Point Protocol over Ethernet) terminiert. Andererseits werden vom DSL-AC kommende Daten vom Zugangsmultiplexer 16 an die betreffenden Teilnehmer weitergeleitet.

Im Ausführungsbeispiel ist an die Trenneinheit 34 kein herkömmliches Telefon, d.h. insbesondere kein analoges Telefon und kein ISDN-Telefon angeschlossen. In einem solchen Fall ist von der Vermittlungsstelle 12 aus keine Spannungsversorgung in Richtung des Teilnehmers TlnA erforderlich. In einem solchen Fall würde dann aber der Breitbandpfad selbst über keine eigene Speisung verfügen. Im Falle eines Stromausfalls beim Teilnehmer TlnA sind sein Netzabschlussgerät 38 sowie die Datenverarbeitungsanlage 40 betroffen und fallen aus. Da diese Eigenschaft heute jedoch insbesondere auch beim Teilnehmer selbst aufgrund der technischen Notwendigkeiten akzeptiert wird und die Entwicklung sogar noch dahin geht, dass die ursprünglich über die POTS- bzw. ISDN-Schnittstellen transportierten Sprachdienste durch VoIP-Dienste (Voice over Internet Protocol) abgelöst werden, verliert auch der von der Vermittlungsstelle 12 bzw. vom Amt gespeiste Gleichstrompfad mehr und mehr seine ursprüngliche Bedeutung.

Diese Eigenschaft macht sich das neue Konzept für eine teilnehmerseitige Speisung zu nutze, indem es den freiwerdenden Pfad nutzt und eine rückwärts gewandte Speisung von Netzkomponenten durch den Teilnehmer TlnA vorsieht, siehe dicke Pfeile in Figur 1 auf den Leitungen 42 und 28. Im Ausführungsbeispiel werden nur teilnehmerbezogene Anschlusseinheiten in der Vermittlungsstelle 12 gespeist. Jedoch kann auch nur ein Teil einer Anschlusseinheit gespeist werden oder der Teilnehmer wird zur Speisung von zentralen Einheiten herangezogen.

Die Spannungsversorgung 36 ist beispielsweise immer aktiv. Alternativ schaltet der Teilnehmer TlnA die Spannungsversorgung 36 manuell, beispielsweise über eine Steckerleiste, nur gemeinsam mit dem Netzabschluss 38 und der Datenverarbeitungsanlage 40 ein. Wie unten anhand der Figur 4 weiter erläutert wird, lässt sich die Spannungsversorgung 36 auch immer nur dann (und auch nur dann!) aktivieren, wenn eine Breitbandübertragung realisiert werden soll, unabhängig von der Richtung, aus der eine Verbindungsaufbauanforderung kommt.

Bereits die Anschlusskonfiguration gemäß Figur 1 bietet zahlreiche technische Wirkungen und Vorteile. Jedoch ist die Erfindung besonders wirksam, wenn beispielsweise eine Anschlusskonfiguration 110 vorliegt, wie in Figur 2 gezeigt.

Figur 2 zeigt eine teilnehmerseitige Speisung einer Anschlusseinheit, die Teil einer von einer Vermittlungsstelle 200 abgesetzten Einheit ist, nämlich eines DSL-Zugangsmultiplexers 204, der auch als Mini-DSLAM bezeichnet wird. Auf der Seite des Teilnehmers TlnA bleibt die Anschlusskonfiguration 110 im Vergleich zur Anschlusskonfiguration 10 unverändert, so dass gleiche Bestandteile mit Bezugszeichen bezeichnet werden, denen eine 1 vorangestellt ist. Die Funktion dieser Bestandteile wird nicht noch einmal erläutert, so dass auf die Ausführungen zu Figur 1 verwiesen wird.

Jedoch enthält eine Vermittlungsstelle 112 einen DSL-Zugangsmultiplexer 200, dessen Bestandteile vollständig von der Vermittlungsstelle 112 gespeist werden. Im Ausführungsbeispiel liegt eine optische Übertragungsleitung 202 zwischen dem Zugangsmultiplexer 200 und dem Zugangsmultiplexer 204. Der Aufbau des Zugangsmultiplexers 204 wird unten näher erläutert. Zentrale Bestandteile des Multiplexers 204 werden beispielsweise über eine lokale Energieversorgung des Zugangsmultiplexers 204 versorgt. Wird anstelle der oder zusätzlich zu der optischen Leitung 202 eine metallische Leitung verwendet, so wird bei einem anderen Ausführungsbeispiel der zentrale Teil des Zugangsmultiplexers 204 durch die Vermittlungsstelle 112 ferngespeist. Auch beim Verwenden einer optischen Übertragungsleitung 202 können beispielsweise alte Kupferleitungen zwischen der Vermittlungsstelle und dem Zugangsmultiplexer 204 zur Fernspeisung von zentralen Einheiten des Multiplexers 204 verwendet werden.

Zwischen dem Zugangsmultiplexer 204 und der Trenneinheit 134 befindet sich eine Kupferzweidrahtleitung 206, auf der Daten gemäß einem xDSL-Verfahren übertragen werden. Die Leitung 206 dient außerdem zur Energieversorgung einer für den Teilnehmer TlnA in dem Zugangsmultiplexer 204 vorhandenen Anschlusseinheit von der Seite des Teilenehmers TlnA her.

Auf der Leitung 206 wird beispielsweise gemäß einem ADSL-Verfahren oder gemäß einem VDSL-Verfahren übertragen. Insbesondere bei VDSL-Technik wird eine zusätzliche Bandbreite im Wesentlichen durch eine kürzere Reichweite bzw. Länge der Leitung 206 erkauft, so dass kleinere Netzkomponenten (sogenannte Mini-DSLAM) dicht an den Teilnehmer herangerückt werden müssen. Problemtisch hierbei ist jedoch immer die Energieversorgung dieser kleinen Einheiten, welche z.B. durch eine Fernspeisung über mehrere freie Adernpaare realisiert werden müsste. Darüber hinaus müsste der Netzbetreiber an zentraler Stelle, z.B. innerhalb der Vermittlungsstelle 112, ausreichende Ressourcen zur Speisung der abgesetzten Einheiten 204 bereitstellen. Eine lokale Speisung der Mini-DSLAM ist zwar auch denkbar, reduziert jedoch die Einsatzmöglichkeiten dieser Geräte dadurch, dass ihre Anwendung auf entsprechend versorgte Plätze beschränkt bleibt bzw. hohe Wartungskosten verursacht.

Figur 3 zeigt Bestandteile des Zugangsmultiplexers 204. Der Zugangsmultiplexer 204 enthält eine Vielzahl von Teilnehmeranschlusseinheiten Port A bis Port X, an denen jeweils eine Teilnehmeranschlussleitung 206, 210, 212 bzw. 214 angeschlossen ist. Die Anschlussleitung 206 führt zum Teilnehmer TlnA. Die Anschlussleitung 210 führt beispielsweise zum Teilnehmer TlnB. Die Anschlussleitungen 212 führen zu weiteren nicht dargestellten Teilnehmern. Die Anschlussleitung 214 führt zum Teilnehmer TlnX.

Die Anschlussleitungen 206, 210, 212 bzw. 214 sind an Anschlüssen AA bis AX angeschlossen. Die Teilnehmeranschlusseinheiten Port A bis Port X enthalten jeweils Treiberschaltungen, die beispielsweise gemäß einem DMT-Verfahren (Discrete Multitone) arbeiten. Außerdem enthalten die Anschlusseinheiten Empfangseinheiten, die beispielsweise Analog-zu-Digital-Wandler enthalten.

Der Multiplexer 204 enthält außerdem zentrale Einheiten 208, die beispielsweise der Überwachung der Teilnehmeranschlusseinheiten Port A bis Port X dienen und insbesondere Verbindungsaufbauanforderungen erkennen, die von diesen Teilnehmeranschlusseinheiten Port A bis Port X kommen. Andererseits können die zentralen Einheiten 208 auch Verbindungsanforderungen, die von der Seite des Netzes kommen, an die Teilnehmeranschlusseinheiten Port A bis Port X weitergeben.

Wie in Figur 3 dargestellt ist, wird die Leitung 202 an einen zentralen Anschluss ZA des Zugangsmultiplexers 204 angeschlossen. Die zentrale Einheit 208 bzw. die zentralen Einheiten 208 enthalten außerdem zentrale Kopplungseinheit ZKE1 bis ZKE4, denen lokale Koppeleinheiten KA bis KX der Teilenehmeranschlusseinheiten Port A bis Port X entsprechen. Anstelle mehrerer zentraler Kopplungseinheiten ZKE1 bis ZKE4 wird bei einem anderen Ausführungsbeispiel nur eine zentrale Kopplungseinheit ZKE verwendet. Der Aufbau der Kopplungseinheiten ist bekannt, beispielsweise wird ein Bussystem verwendet oder es wird eine Meldungsschnittstelle verwendet, deren Funktionen durch ein Programm erbracht werden.

Wie in Figur 3 dargestellt ist, baut das Verfahren der teilnehmerseitigen Speisung auf einer Kombination der bisher gebräuchlichen Verfahren mit der zusätzlichen Speisung durch die Teilnehmer oder auf einer ausschließlichen Speisung durch Teilnehmer auf und spart damit Ressourcen innerhalb des Netzes ein, ohne eine Einschränkung an Funktionalität zu bewirken. Das Verfahren geht davon aus, dass bspw. alle zentralen, von mehreren Teilnehmern genutzten Funktionsblocks eines Mini-DSLAM weiterhin durch den Netzbetreiber versorgt werden, die teilnehmerbezogenen Funktionsblocks Port A bis Port X jedoch individuell durch die Teilnehmer gespeist werden. Zu diesen teilnehmerbezogenen Funktionsblocks gehören insbesondere die leistungsspezifischen Treiberschaltkreise, die einen großen Anteil an der Leistungsaufnahme eines DSLAM haben.

Durch den Einsatz des neuen Verfahrens können im Falle einer Fernspeisung des Mini-DSLAM 204 durch den Netzbetreiber zum Einen Adernpaare eingespart werden, die ansonsten nur für Speisezwecke benötigt worden wären. Zum Anderen kann der Netzbetreiber seine primäre Stromversorgung für einen geringeren Leistungsbedarf auslegen oder weglassen.

Neben der anhand der Figuren 1 bis 3 dargestellten prinzipiellen Funktionsweise gibt es eine besondere Funktion, die bspw. in diesem Zusammenhang realisiert werden kann und die deshalb anhand der Figur 4 genauer erläutert wird.

Figur 4 zeigt Einheiten, die eine dynamische teilnehmerseitige Energieversorgung des Zugangsmultiplexers 204 ermöglichen. Gemäß einem Ausführungsbeispiel gibt es im Zugangsmultiplexer 204 als Bestandteil der zentralen Einheit 208 eine Anforderungseinheit 250, die beispielsweise als Schalter 254, insbesondere als Relaisschalter oder als Transistorschalter realisiert ist. Alternativ lässt sich jedoch auch eine andere Art der Aufmodulation verwenden, siehe beispielsweise Verbindungsabschnitt 254b, in den beispielsweise eine elektrische Spannung eingeprägt werden kann.

Die Anforderungseinheit 250 hat einen Eingangssignalanschluss 251, auf dem ein Signal gesendet wird, wenn netzseitig eine Verbindungsaufbauanforderung vorliegt. In diesem Fall wird der Schalter 254a geschlossen bzw. wird in den Leitungsabschnitt 254b auf andere Art, beispielsweise durch einen Impuls oder eine Wechselspannung ein Signal eingeprägt. In diesem Fällen wird eine Erfassungseinheit auf der Seite des Teilnehmers als Strom- oder Spannungserfassungseinheit ausgebildet.

Der Schalter 254a liegt zwischen einem Potentialeingang PE1 und einer Betriebspotentialleitung 260. Die Anschlusseinheit wird als Lastwiderstand RL in Figur 4 dargestellt. Eine weitere Betriebspotentialleitung 262, z.B. die Masseleitung, führt zu einem Potentialeingang PE2. Die Potentialeingänge PE1 und PE2 sind Bestandteile des Anschlusses AA. Eine Ader 270 der Leitung 206 führt von dem Potentialeingang PE1 zu einem Potentialausgang PA1 an einem Anschluss A0 der Trenneinheit 34. Eine andere Ader 272 der Leitung 206 führt von dem Potentialeingang PE2 zu einem Potentialausgang PA2 an dem Anschluss A0 der Trenneinheit 34 bzw. 134. In der Trenneinheit 134 bzw. 34 auf der Seite des Teilnehmers TlnA gibt es eine Betriebspotentialleitung 280 und eine Betriebspotentialleitung 282, beispielsweise eine Masseleitung, die zwischen der Spannungsversorgung 136 und dem Potentialausgang PA1 bzw. zwischen der Spannungsversorgung 136 und dem Potentialausgang PA2 liegen.

Auf der Seite des Teilnehmers TlnA gibt es außerdem eine Erfassungseinheit 290, die über zwei Abgriffe 292, 294 mit der Betriebspotentialleitung 282 oder alternativ 280 unter Zwischenschaltung eines Widerstands R verbunden ist. Die Erfassungseinheit 290 erfasst das Schließen des Schalters 254a, beispielsweise durch Erfassen des Stroms in der Betriebspotentialleitung 280, 282, durch Erfassung eines Wechselspannungssignals bzw. eines Impulses, der von dem Zugangsmultiplexer 204 eingeprägt wird oder auf andere geeignete Art und Weise. Beim Erfassen des Anforderungssignals erzeugt die Erfassungseinheit 290 auf einer Ausgangsleitung 296 ein Signal, das beispielsweise die Stromversorgung 136 einschaltet bzw. von einem kleinen Spannungspegel auf einen großen Spannungspegel schaltet, z.B. von einer Spannung kleiner als 15 Volt aber größer als 1 Volt auf eine Spannung größer als 80 Volt. Über eine Signalleitung 298 lässt sich bei einem anderen Ausführungsbeispiel die Spannungsversorgungseinheit 136 auch von der Teilnehmerseite des Teilnehmers TlnA her steuern, beispielsweise von der Netzabschlusseinheit 138 her.

Wird der Verbindungsabschnitt 254b anstelle des Schalters 254a verwendet, so lässt sich eine Betriebsspannung, d.h bspw. eine konstante Gleich- oder Wechselspannung, in die Anschlusseinheit Port A einspeisen, dadurch, dass über die Signalleitung 298 die Spannungsversorgung 136 eingeschaltet wird. In diesem Fall ist keine zusätzliche Erfassungseinheit 300 in dem Zugangsmultiplexer 204 erforderlich.

Wird dagegen ein Schalter 254a verwendet, so ist auch eine Erfassungseinheit 300 in dem Zugangsmultiplexer 204 erforderlich. Die Erfassungseinheit 300 ist beispielsweise Bestandteil der zentralen Einheiten 208. Im Ausführungsbeispiel enthält die Erfassungseinheit 300 zwei Abgriffe 302, 304, die zu der Betriebspotentialleitung 262 bzw. 260 führen, bzw. zu den Potentialeingängen PE1 und PE2. Über die Erfassungseinheit erfasst der Multiplexer 204, dass die Spannungsversorgung 136 von der Seite des Teilnehmers TlnA her eingeschaltet oder auf einen höheren Spannungswert geschaltet worden ist. Deshalb wird über eine Leitung 306a einer zentralen Steuereinheit des Multiplexers 204 gemeldet, dass die angeforderte höhere Spannung nun anliegt bzw. eine Verbindungsanforderung vom Teilnehmer TlnA aus gesendet wird bzw. gesendet werden soll und dass somit über die Anforderungseinheit 250 der Schalter 254a geschlossen werden muss. Alternativ kann die Erfassungseinheit 300 über eine Leitung 306b dies auch direkt der Anforderungseinheit 250 signalisieren.

Bei anderen Ausführungsbeispielen werden andere Signalisierungsmöglichkeiten verwendet, um von der Seite des Teilnehmers TlnA her das Anliegen der angeforderten höheren Spannung bzw. eine Verbindungsaufbauanforderung zur Seite des Multiplexers 204 zu signalisieren, beispielsweise Einprägen eines Wechselsignals in die Leitung 206 oder Senden eines Impulses oder einer Impulsfolge. Die Erfassungseinheit 300 kann in diesen Fällen auch als Stromerfassungseinheit ausgeführt werden.

Während es beispielsweise für Internetbetrieb ausreichend ist, wenn der Teilnehmer TlnA selbst entscheidet, wann er seinen Teil der Speisung in Betriebs setzt und damit eine Breitbandübertragung ermöglicht, ist dieses Vorgehen für Dienste wie VoIP nicht ausreichend. Bei VoIP kann es wie beim konventionellen Telefondienst zu einem netzseitig initiierten Verbindungsaufbauwunsch kommen. Dieses funktioniert jedoch nur dann, wenn die teilnehmerseitige Speisung, d.h. die Spannungsversorgung 36 betriebsbereit ist und somit ein Verbindungsaufbau möglich ist. Da der Teilnehmer jedoch nicht weiß, wann er angerufen wird, müsste er vorsorglich die Spannungsversorgung 36 immer eingeschaltet lassen. Abhilfe schafft in diesem Fall jedoch das erläuterte Verfahren, das eine Aktivierung der Verbindung durch den DSLAM 204 ermöglicht. In diesem Fall wird beispielsweise ein Gleichstrom in der in Figur 4 gezeigten Stromschleife durch den Multiplexer 204 initiiert, indem dieser die Gleichstromschleife moduliert. So kann z.B. das Erkennen einer Speisespannung durch den Multiplexer 204 als Signal für eine Betriebsbereitschaft des Endgerätes (Modem) interpretiert werden und das Schließen des Stromkreises durch den Multiplexer 204 kann eine Aktivierung des Modems bewirken.

Bei einem anderen Ausführungsbeispiel wird ein Schalter verwendet, der sich in beiden Betriebspotentialleitungen 260, 262 befindet.

Zusammenfassend gilt, dass ein Verfahren beschrieben worden ist, das eine Speisung von Netzkomponenten des Teilnehmeranschlussbereichs durch auf der Teilnehmerseite platzierte Endgeräte realisiert. Dieses Verfahren steht im Gegensatz zu klassischen Speiseverfahren, bei denen Endgeräte des Teilnehmers bisher zum überwiegenden Teil über das Kommunikationsnetz selbst mit Energie versorgt wurden. Mit Hilfe des neuen Verfahrens kann die Energieversorgung kleinerer Netzkomponenten (z.B. Mini-DSLAM), die zumeist von der Vermittlung abgesetzt betrieben werden, einfacher und damit auch wirtschaftlicher realisiert werden.

Zusammenfassend gilt weiterhin, dass ein Verfahren erläutert worden ist, das eine teilnehmerseitige Speisung (SBF - Subscriber Based Feeding) zur Verfügung stellt. Dieses Verfahren trägt der Entwicklung Rechnung, dass heutige Endgeräte derartig komplexe Funktionen haben, so dass ihre Fremdspeisung durch die Vermittlungsstelle wenn nicht unmöglich so zumindest unwirtschaftlich wird und gleichzeitig die Notwendigkeit einer Notspeisung dadurch in Frage gestellt ist, dass Teilnehmer zunehmend über alternative, mobile Kommunikationsmittel verfügen.

Das neue Verfahren basiert auf der Tatsache, dass ein Endgerät zum Einen zukünftig nur noch dann aktiv sein muss, wenn der Teilnehmer dieses ausdrücklich wünscht und das Endgerät sowieso nur dann problemlos benutzt werden kann, wenn beim Teilnehmer eine gesicherte Energieversorgung vorhanden ist. Unter diesen Voraussetzungen kann der Teilnehmer durch Aktivierung seines Endgerätes nicht nur die für das Gerät selbst erforderliche Energie bereitstellen, sondern das bisherige Prinzip lässt sich umkehren und es kann zusätzlich Energie in Richtung Netz eingespeist werden. Ein solches Verfahren bietet die Möglichkeit, die vermittlungsseitige Kommunikationstechnik wirtschaftlicher zu realisieren oder es kann im Zusammenspiel mit neuen abgesetzten Netzkomponenten, wie z.B. sogenannten aktiven Verteilerknoten zum Einsatz kommen und dadurch die Effizienz dieser Komponenten weiter steigern.

Dadurch, dass die konventionellen Schmalbanddienste zukünftig dramatisch an Bedeutung verlieren werden und durch breitbandintegrierte Dienste wie z.B. VoIP (Voice over Internet Protocol) ersetzt werden, entsteht die Möglichkeit, die bisherigen Gleichstrompfade neu zu gestalten. Der hier erläuterte Vorschlag legt seinen Schwerpunkt auf das dem Teilnehmer zugewandte Segment und bezieht das dynamische Nutzungsverhalten des Teilnehmers bei der Energieversorgung von Netzkomponenten ein. Andere Vorschläge betreffen beispielsweise die Speisung des netzseitigen Segmentes.

## Patentansprüche

1. Verfahren zur Spannungsversorgung von Anschlusseinheiten (A, B) einer Anschlussvorrichtung (16, 204) mit einer Mehrzahl von Anschlusseinheiten (A, B), die jeweils zumindest einen Anschluss (AA, AB) enthalten, an den jeweils eine zu zumindest einem Teilnehmer (TlnA, TlnB) führende Leitung (206, 210) angeschlossen ist oder anschließbar ist, wobei die Anschlüsse (AA) jeweils einen Betriebspotentialeingang (PE1, PE2) enthalten, an dem ein Betriebspotential zum Erzeugen einer Betriebsspannung der jeweiligen Anschlusseinheit (A, B) und/oder zumindest eines Teils der Anschlußvorrichtung anliegt oder anlegbar ist,
**dadurch gekennzeichnet,**
**dass** die jeweilige zu dem zumindest einen Teilnehmer (TlnA, TlnB) führende Leitung (206, 210) zur Energieversorgung der für den jeweiligen Teilnehmer (TlnA, TlnB) vorhandenen Anschlusseinheit (A, B) dient,
die Spannungsversorgung der Anschlusseinheiten (A, B) aktiviert wird, wenn eine Breitbandübertragung über die jeweilige Leitung (206, 210) realisiert werden soll,
bei dem ein Ausgang einer Anforderungseinheit auf einen ersten Anschluss einwirkt, um das Anlegen oder das Abschalten eines ersten Betriebspotentials zu veranlassen,
wobei eine Speisung von Netzkomponenten des Teilnehmeranschlussbereichs durch auf der Teilnehmerseite platzierte Endgeräte realisiert wird.

2. Verfahren zur Spannungsversorgung von Anschlusseinheiten (A, B) einer Anschlussvorrichtung (16, 204) nach Anspruch 1, **dadurch gekennzeichnet,**
**dass** die Anschlussvorrichtung (16, 204) eine zentrale Einheit (208) enthält,
die einen zentralen Anschluss (ZA) zu einem Datenübertragungsnetz (8) hin enthält und von einer gemeinsamen Spannungsversorgungseinheit versorgt wird.

3. Anschlussvorrichtung mit Mitteln zum Ausführen aller Schritte gemäß einem Verfahren nach einem der Ansprüche 1 oder 2.

## Claims

1. Method for supplying voltage to connection units (A, B) of a connection device (16, 204) having a plurality of connection units (A, B), which each contain at least one connection (AA, AB) to which a respective line (206, 210) leading to at least one subscriber (TlnA, TlnB) is connected or can be connected, wherein the connections (AA) each contain an operating potential input (PE1, PE2) to which an operating potential for generating an operating voltage of the respective connection unit (A, B) and/or at least part of the connection device is applied or can be applied,
**characterized in that**
the respective line (206, 210) leading to the at least one subscriber (TlnA, TlnB) serves for supplying energy to the connection unit (A, B) present for the respective subscriber (TlnA, TlnB),
the supply of voltage to the connection units (A, B) is activated when a broadband transmission via the respective line (206, 210) is intended to be realized, in which an output of a request unit acts on a first connection in order to prompt the application or the disconnection of a first operating potential,
wherein feeding of network components of the subscriber connection region is realized by terminals placed at the subscriber side.

2. Method for supplying voltage to connection units (A, B) of a connection device (16, 204) according to Claim 1, **characterized in that** the connection device (16, 204) contains a central unit (208), which contains a central connection (ZA) to a data transmission network (8) and is supplied with power by a common voltage supply unit.

3. Connection device having means for executing all the steps in accordance with a method according to either of Claims 1 and 2.

## Revendications

1. Procédé d'alimentation électrique d'unités de connexion (A, B) d'un dispositif de connexion (16, 204) comprenant une pluralité d'unités de connexion (A, B), lesquelles comportent respectivement au moins une connexion (AA, AB) à laquelle est respectivement raccordée ou peut être raccordée une ligne (206, 210) menant à au moins un abonné (TlnA, TlnB), les connexions (AA) comportant respectivement une entrée de potentiel de service (PE1, PE2) à laquelle est appliqué ou peut être appliqué un potentiel de service en vue de générer une tension de service de l'unité de connexion (A, B) correspondante et/ou d'au moins une partie du dispositif de connexion,
**caractérisé en ce que**
la ligne (206, 210) respective qui mène à l'au moins un abonné (TlnA, TlnB) sert à l'alimentation en énergie de l'unité de connexion (A, B) présente pour l'abonné (TlnA, TlnB) correspondant,
l'alimentation électrique des unités de connexion (A, B) est activée lorsqu'une transmission à large bande doit être réalisée par le biais de la ligne (206, 210) correspondante, avec laquelle une sortie d'une unité de demande agit sur une première connexion pour provoquer l'application ou la déconnexion d'un premier potentiel de service,
une alimentation de composants de réseau de la zone de connexion d'abonné étant réalisée par des terminaux placés du côté de l'abonné.

2. Procédé d'alimentation électrique d'unités de connexion (A, B) d'un dispositif de connexion (16, 204) selon la revendication 1, **caractérisé en ce que** le dispositif de connexion (16, 204) contient une unité centrale (208), laquelle contient une connexion centrale (ZA) vers un réseau de transmission de données (8) et est alimentée par une unité d'alimentation électrique commune.

3. Dispositif de connexion comprenant des moyens pour exécuter toutes les étapes d'un procédé selon l'une des revendications 1 ou 2.
